# EUROPEAN PATENT APPLICATION

(11) **EP 0 841 784 A2**
(43) Date of publication of application: **13.05.1998**
(21) Application number: 97500136.3
(22) Date of filing: 06.08.1997
(51) Int. Cl.: H04L 12/56

(54) **Packet switch for the transmission of PCM frames**

(30) Priority: 16.08.1996 ES 9601818
(71) Applicant: TELEFONICA DE ESPANA, S.A., 28013 Madrid (ES)
(72) Inventor: Conesa Lareo, Jose Luis, 28020 Madrid (ES); Mateos Borrego, Pedro, 28020 Madrid (ES); Perez Roldan, Luis, 28020 Madrid (ES)
(74) Representative: Sanchez del Campo Gonzalez de Ubierna, Ramon

(57) **Abstract**

A packet switching and modulation trame channel device through codified pulses, consisting of a statistical receiving block (11), a statiatical transmitting block (12), a trame memory controller (10), a MIC switching matrix (14), an access controller to internal resources (26), and a loop controller (13), all these blocks constituting a switching circuit (2), which, to a number of eight, are incorporated in the device together with a microprocessor (1), eight trame memories (3), an internal communication bus (9), a statistical bus (7), a circuit switching bus (8), eight I/O drivers, and eight bistable circuits (5).

## Description

### BACKGROUND OF THE INVENTION

The present specification relates to an application for a patent of invention relating to a packet switching and modulation trame channel device through codified pulses in a telephone switching system, the evident purpose of which is to be configured as a device that, in addition to carry out a packet switching, allows trame modulation to be retransmitted through codified pulses (thereinafter called "MIC"), including the MIC trame switching.

### FIELD OF THE INVENTION

This invention will find application in the field of telecommunications, and, specifically, in the field of switching systems for telephone services.

### RELATED ART

The different equipments existing in the market dedicated to the packet switching used in different data networks are well knon.

Likewise, in the transmission field, equipments are used for retransmitting MIC trames.

Nevertheless, on the applicant's part, nothing is known on the existence of any equipment performing trame channel switching.

On the lines of a future installation of the system (MORE), in order to modernize the analog stations of the Telephone Network, an imperative need for relying on a device that, in addition to carry out a packet swi.tching, allows the trames MIC to be retransmitted, has been felt, including the trame channel switching MIC.

An evident solution to these problems at present in this matter, would be to rely on a device which could carry out a packet switching and modulation trame channel device thru codified pulses.

Nevertheless, up to date nothing is known on the existence of an invention fitted with the characteristics as pointed out as suitable.

### SUMMARY OF THE INVENTION

The packet switching and modulation trame channel device thru codified pulses as proposed by the invention, constitute itself an evident novelty in the performance field, since, on the lines of the utilization of the envisaged device, the problems in question are satisfactorily solved, permitting a functional character non contemplated at present in the state of the art.

In a more definite way, the packet switching and modulation trame channel device thru codified pulses of the invention is basically constituted by the following elements, namely:-
- A microprocessor
- A series of trame memories
- An internal communication bus
- A statistical bus
- A circuit switching bus
- A series of switching circuits
- A series of I/O link drivers
- A series of biestable circuits.

The switching circuits integrated in the packet switching and modulation trame channel device through codified pulses are connected each other by means of the statistical bus and the circuit switching bus, each of the communication circuits acceding to a trame memory outside it, as well as an I/O driver, said switching circuit working jointly and being regulated by the microprocessor.

The access of the microprocessor to the internal resources of the switching circuit for being set, programmed or controlled, is performed through the internal communication bus.

The statistical bus is the physical support of the packet switching, the switching circuits related each other remaining connected to said bus.

The statistical bus supports the transfer of trames from a switching circuit through a bistable circuit to an output statistical link.

The circuit communication bus is the physical medium through which a switching between receiving channels MIC and transmitting channels MIC, of the switching circuits integrating the packet switching and modulation trame channel device through codified pulses, is performed.

The circuit switching bus is configured like a multiplexed bus of data and addresses, and the switching circuits with their I/O lines accede to it.

Links MIC, as well as the inlet statistical link, arrive at and go out of the driver, one for each switching circuit, acting as an interface for connection to the switching circuit.

The switching circuit connection with the output statistical link is performed through the statistical bus, which will accede to the driver via a bistable circuit.

Each switching circuit is basically constituted by the following blocks, namely:-
- Statistical receiver.
- Statistical transmitter.
- Controller of trame memory.
- MIC switching matrix.
- Acceding controller to internal recourses.
- Loop controller.

The function of the statistical receiver is to identify and store the trames arriving over the input statistical link connected to its switching circuit, and by means of the control of the trame memory controller, it will store the trame received in the trame memory.

Firstly, the statistical receiver synchronizes the data received with the local clock, which will be of same frequency as that of the clock with which the data were sent, although it is possible a phase differential.

The microprocessor indicates the statistical receiver when it must extract a trame, and starting from which trame memory address it should be stored it.

The statistical receiver checks the integrity of the trame received, and indicates the microprocessor the errors detected by it during its reception, and if the trame is correct, it decodes the trame header, and informs the microprocessor that the reception thereof is ended, as well as the value of the trame header.

Once a trame has been received and treated, the estatistical receiver waits until the microprocessor tells it that it must extract other new trame.

The statistical transmitter, under the control of the trame memory controller, extracts trames from the trame memory, and send them thru one of the output statistical links, connected to the packet switching and modulation trame channel device through codified pulses of the invention.

Said transmission is performed under the control of the microprocessor, which indicates the statistical transmitter starting from which memory address the trame to be transmitted is found, and through which of the output statistical links it is to come out.

When the statistical transmitter receives a transmission order, it copies the contents of the trame memory in the output statistical link, until finding an indication of the end of trame in the memory.

The statistical transmitter informs the microprocessor about the end of the trame sending, and it waits other new order of sending.

The statistical transmitter synchronizes the outgoing trame with the local clock.

The trame memory controller coordinates the accesses to the trame memory, and the accesses can come from the statistical receiver when it needs to write a trame, or from the statistical transmitter when it needs to read a trame, or else thru the trame memory controller itself when it needs to refresh the trame memory.

The MIC switching matrix of each switching circuit is related to the matrices of the remaining switching circuits belonging to the packet switching and modulation trame channel device through codified pulses of the invention, in order to perform jointly the switching function of the channels MIC.

Each of the matrices controls an input link MIC, and an output link MIC.

In order to perform the switching, each of the switching matrices MIC tells, in a sequential way, the other ones, the address of the channel over which the data have arrived which must come out via the channel controlled by it.

The matrix responsible for the channel thru which the data have arrived, will put them in the circuit switching bus common to all the switching matrices, so that they can be read by the first of the matrices.

The allocation of which data must come out in each of the channels MIC, is controlled by the microprocessor, which programs a memory of the switching matriz MIC with the information of said assignment.

Under the supervision of same microprocessor, the information coming out via each channel can be the replica of a programmable repetitive pattern.

The controller of access to internal recourse makes easy the communications between the microprocessor and each of the switching circuit blocks, taking on the task of the fact that the signals have an adequate timing, and that the accesses be made of a well arranged manner.

The loop controller allows the realization of closed loops between the statistical receiver and the statistical transmitter, as well as between the input and ouput of the switching matrix MIC.

This type of closed loops is very useful for performing proofs in the circuit and in the printed circuit board.

### BRIEF DESCRIPTION OF THE DRAWINGS

In order to complement this description and aid to a better understanding of the characteristics of the invention, the appending drawings, which are a part of this specification, show, by way of illustrative and non limiting exemple, the following figures:

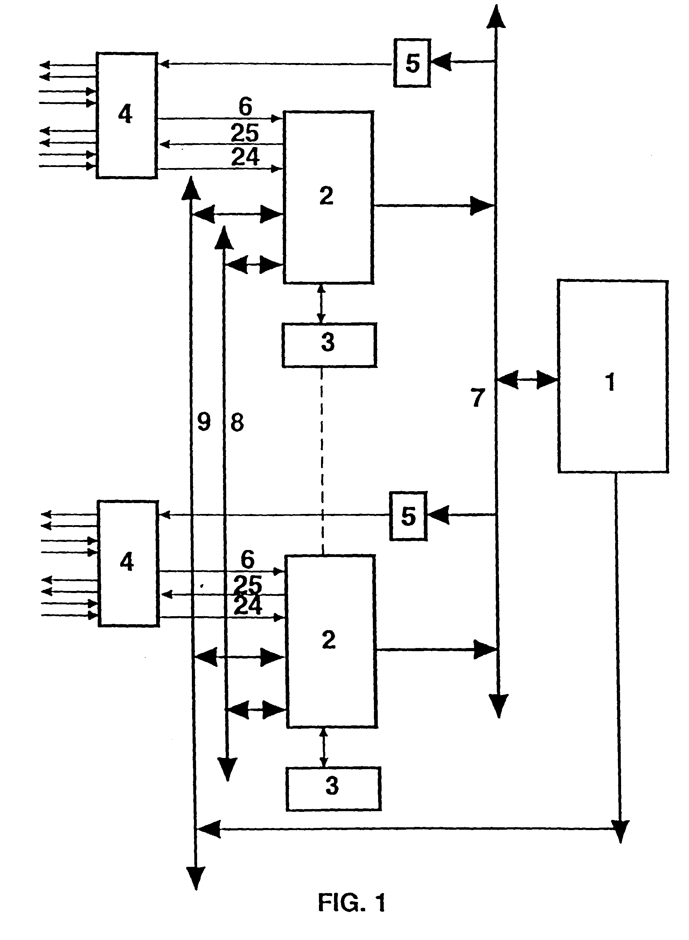

Figure 1 corresponds to a block diagram of the packet switching and modulation trame channel device through codified pulses of the invention.

Figure 2 shows, also, in a block diagram, a switching circuit.

Figure 3 corresponds, lastly, to a block diagram of the switching matrix block MIC.

### DETAILED DESCRIPTION OF THE PREFERRED EMBODIMENT

In the light of these figures, it can be seen how the packet switching and modulation trame channel device thru codified pulses of the invention is constituted starting from a microprocessor (1), eight switching circuits (2), eight trame memories (3), an internal communication bus (9), a statistical bus (7), a circuit switching bus (8), eight I/O drivers (4), and eight bistable circuits (5).

The statistical links and the MIC links, one for each switching circuit, arrive at and come out of the driver (4), acting as an interface for connection to the switching circuit (2).

The switching circuit (2) connection with the output statistical link is performed through the statistical bus (7), which will accede to the driver (4) through a bistable circuit (5).

The input of the statistical link to the switching circuit (2) is the input (6), and the input and output of the links MIC are, respectively, the input (24), and the output (25).

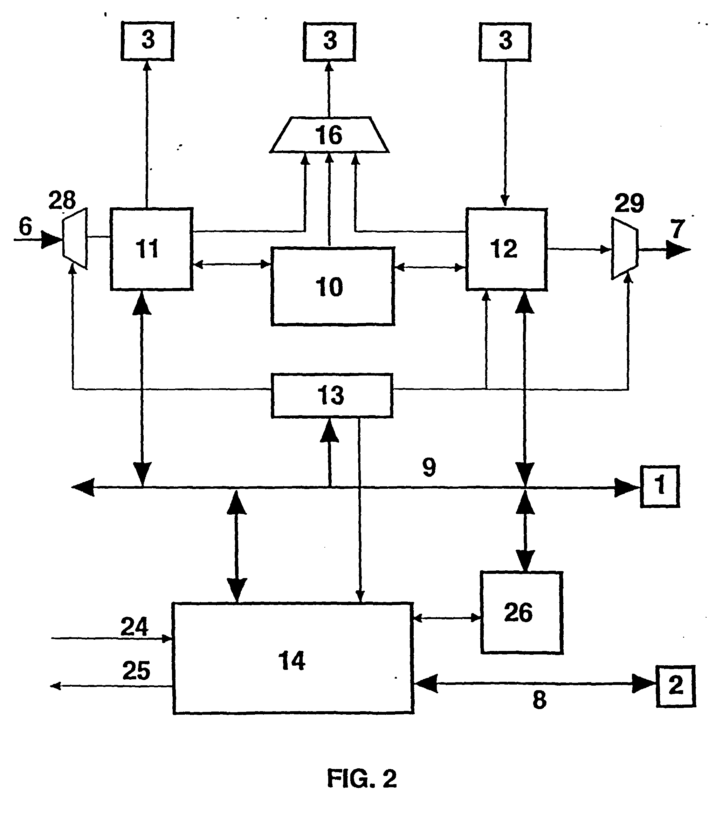

Figure 2 shows a block diagram of the switching circuit (2), which is, basically, constituted by a statistical receiver (11), a statistical transmitter (12), a trame memory controller (10), a MIC switching matrix (14), an access controller to internal resources (26), and a loop controller (13).

The function of the statistical receiver (11) is to identify and store the trames arriving via the input statistical link (6), through a multiplexer (28), and to communicate with the trame memory controller (10), to store the contents of the received trames in the trame memory.

Firstly, the statistical receiver (11) synchronizes the data received with the local clock, it detects the carrier and the flag beginning the trame.

The microprocessor (1) tells the statistical receiver (11) when it must extract a trame and starting from what address it must store it in the trame memory (3).

The statistical receiver (11), under the control of the trame memory controller (10), and with the aid of the multiplexor (19), will store the trame received with all its fields, and it will not check its CRC.

Likewise, the statistical receiver (11) will check the integrity of the trames received, and it will tell the microprocessor (1) the errors detected by it during the reception thereof.

If the error detected by the statistical receiver on the trames received is performed before receiving the level header (3), it will interrupt the trame reception and it will account the error, waiting the microprocessor tells it it must extract other new trame.

If the error is detected once the level header (3) has been received, it will interrumpt the trame reception, it will insert a flag sequence in the trame zone, where the error state is detected, and it will store it in the trame memory (3), as it were a correct trame, and it will account the error.

In case that the trame received will be correct, the statistical receiver (11) decode the trame header, and informs the microprocessor (1) about the value of said header, as well as the end of the trame, remaining then waiting the microprocessor (1) tells it that it must extract other trame.

The access of the microprocessor (1) to the internal resources of the switching circuit (2) to be set, programmed or controlled, is performed through the internal switching bus (9).

Under the control of the trame memory controller (10), the statistical transmitter (12) extracts the trames f r o m the trame memory (3), and send them toward the loop multiplexor (29), the output of which is connected to the access to the statistical bus (7).

The microprocessor (1) tells the statistical transmitter (12) starting from which trame memory address the trame to be transmitted is located, and through which of the access buffers to the statistical bus (7), it should come out.

When receiving the transmission order, the transmitter (12) copies the contents of the trame memory in the indicated output buffer, until finding the end of trame flag.

The statistical transmitter (12) informs, via a register for this purpose, about the end of the transmission to the microprocessor (1).

The function of the statistical transmitter (13) is to synchronize the outgoing trame with the local clock, and also to activate the corresponding access bus to the statistical bus (7).

The statistical bus (7) is the physical support for the packet switching, the statistical transmitters (12) of the eight switching circuits (2) related each other remaining connected to said bus.

The statistical bus (7) supports the transfer of trsmes from a switching circuit (2), through a bistable circuit (5) to the driver (4) of an output statistical link.

The trame memory controller (10) controls the acceses made both the statistical receiver (11) and the statistical transmitter (12) to the trame memory (3), as well as the refresh thereof.

The trame memory controller (10) allots the times of access to the trame memory (3), and the accesses, excepting the refresh, are performed without any interruption.

In order to avoid holding down states between two consecutive reading or writing operations, the time elapsed is to be not higher than 3'906 microseconds.

In a period of time never higher than 3'906 microseconds, three access operations are performed in the following order, namely:
A. - Write
B. - Read
C. - Refresh

The multiplexer (16) physically supports the access to the trame memory (3), allowing the signals generated by the blocks having access to it, to pass toward said memory, and the multiplexor (16) is controlled by the trame memory controller (10), in accordance with the time intervals alloted to each block.

The MIC switching matrix (14) of every switching circuit (2) is related to the seven remaining matrices of the packet switching and modulation trame channel device through codified pulses, to perform jointly the channel switching MIC.

Each of the MIC switching matrices (14) of each switching circuit (2) acts like an input link and an output link.

In order to perform the switching, each of the MIC matrices (14) tells, in a sequential manner and through the circuit switching bus (8), the other matrices the address through which the data which must come out via the channel controlled by it, have arrived at.

The MIC matrix (14), responsible for the channel thru which the data have arrived at, will put them in the circuit switching bus (8) to be read by the former.

The circuit switching bus (8) is the physical medium performing a switching between the MIC receiving channels and the MIC transmitting channels of the eight switching circuits (2), which integrate the packet switching and modulation trame channel device through codified pulses.

The circuit switching bus (8) is a multiplexed bus of data and addresses, and the eight switching circuits (2) with eight input/output lines accede to it.

The allocation of what data must go out at each of the MIC channels, is controlled by the microprocessor (1), which programs a memory of the MIC switching matrix (14), with the information from said allocation.

Under supervision of the microprocessor (1), the information going out of each channel can be a replica of a programmable repetitive pattern.

The access controller to internal resources (26) expedites the communications between the microprocessor (1) and each of the blocks of the switching circuit (2).

The access controller to internal resources (26) knows the element, which can be a register or a memory, where an access is wanted from the internal communication bus (9), as well as the type of operation to be performed.

The accesses are made at the very moment they are requested from the internal communication bus (9).

The loop controller (13) controls the achievement of loops between the statistical receiver (11) and the statistical transmitter (12), as well as between the input (6) and output(7) statistical links.

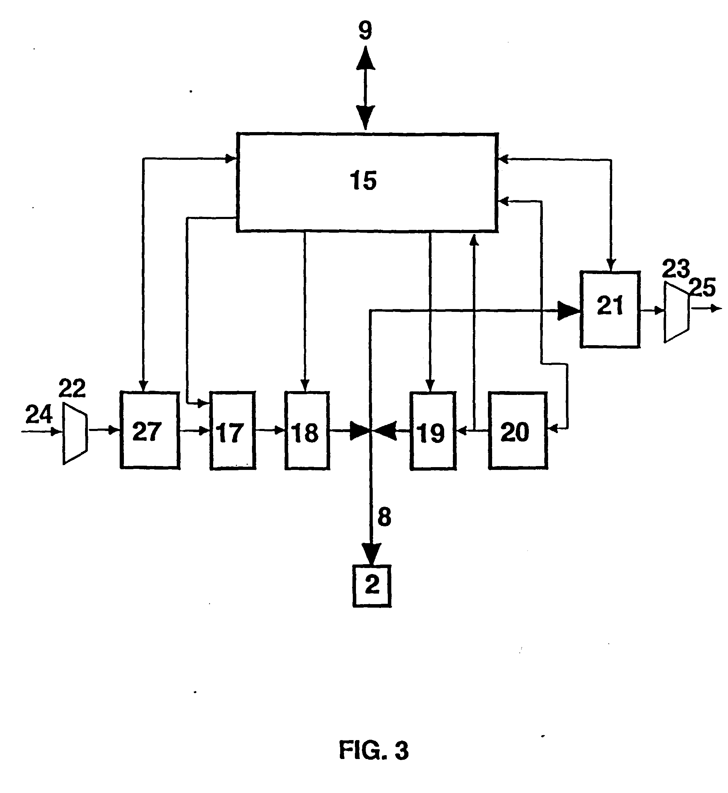

Referring again to figure 3, it shows a block diagram of the MIC switching matrix (14).

The control of the MIC switching matrix accesses (14) to the circuit switching bus (8), is performed by a control block (15), which knows the moment at which there is an access to the circuit switching bus (8), in order to carry out an operation.

A receiving block (27) synchronizes the trame inputting via an input link (24), through the multiplexer (22), supervises and generates synchronism alarms, reads the sample of an inputting channel, and stores it in a sample memory (17).

The sample memory (17) is a memory of 32 x 8 size, in which the receiving block (27) writes the samples of the 32 channels of the MIC trame, and each memory position is related to an inputting channel.

A channel allocation memory (20) relates each outputting channel to a switching circuit (2) and its inputting channel.

Likewise, the channel allocation memory (20) will contain the condition of whether the sample of data picked up from the circuit switching bus (8), or the programmable pattern is to be sent via the ouputting channel.

The channel allocation memory (20) has a capacity of 32 by 9, and it will be dynamically updated from the microprocessor (1) through the internal communication bus (9).

The transmitter (21) of the MIC switching matrix (14) breaks down and transmits the ouputting trame via the multiplexer (23) to the MIC outputting link (25), either the sample entered via the MIC input link or- the programmable pattern.

The block (18) represents the buffer of data output of the circuit switching bus (8), and the block (19) represents the address output buffer.

The loop controller (13) controls the achievement of loops between the transmitter (21) and the receiver (27) of the MIC switching matrix (4), as well as between the MIC receiving link (24) and the MIC transmitting link (25).

It is not considered necessary to extend this description for any expert in the art to understand the scope of the invention and the advantages derived from it.

The materials, shape, size and arrangement of the elements will be open to variation, provided that it does not imply any alteration to the essence of the invention.

The terms under which this specification has been described should be always taken in an ample and non limitative sense.

## Claims

1. A packet switching and modulation trame channel device through codified pulses, of those constituted by a series of switching circuits (2), a microprocessor (1), a series of trame access (3), some output drivers (4), and bistable circuits (5), characterized in that the switching circuits (2) are connected each other by means of a statistical bus (7) and a circuit switching bus (8), each of said switching circuits (2) acceding to an external trame memory (3), and an I/O driver (4), said switching circuits working jointly, and being regulated by the microprocessor (1), since they are interconnected by means of the internal communication bus (9).

2. A packet switching and modulation trame channel device through codified pulses, according to claim 1, characterized in that the switching circuit (2) is constituted by a statistical receiving block (11), a statistical transmitting block (12), a block controlling a trame memory (10), a MIC switching matrix block (14), a block controlling the access to internal resources (15), and a block controlling loops (13), being connected in a packet switching and modulation trame channel device through codified pulses, to other switching circuits (2), identical in accordance with a channel allocation table set by the microprocessor (1), and performing the MIC trame channel switching by request, on the part of the switching circuit (2), to be emitted, from a channel to the switching circuit (2) which received the information to be sent, outputting, via any of the output links, any input link, or the sending of a programmable repetitive patern, under the coordination of the internal resources controller (26) facilitating the microprocessor communications (1) with the divers blocks of each switching circuit (2).

3. A packet switching and modulation trame channel device through codified pulses, according to claim 1 and 2, characterized'in that it sets loops in the data paths between the statistical receiving block (11), and the statistical transmitting block (12), as well as between the output and input channels of the MIC switching matrix block (14).
